# EUROPÄISCHE PATENTSCHRIFT

(11) **EP 2 769 124 B1**
(45) Veröffentlichungstag und Bekanntmachung des Hinweises auf die Patenterteilung: **03.07.2019**
(21) Anmeldenummer: 13708726.8
(22) Anmeldetag: 27.02.2013
(51) Int. Cl.: F16K 1/44, F23N 1/04, G05D 16/00

(54) **GASREGELVENTIL**
GAS CONTROL VALVE
VANNE DE RÉGULATION DE GAZ

(30) Priorität: 27.03.2012 DE 102012102646
(43) Veröffentlichungstag der Anmeldung: 27.08.2014
(73) Patentinhaber: EBM-PAPST Landshut GmbH, 84030 Landshut (DE)
(72) Erfinder: VROLIJK, Enno, NL-7751DX Dalen (NL); KLINK, Hans-Joachim, 88453 Erolzheim (DE); KEBER, Dr., Roland, 84109 Wörth (DE)
(74) Vertreter: Staeger & Sperling Partnerschaftsgesellschaft mbB
(86) Internationale Anmeldenummer: PCT/EP2013/053928
(87) Internationale Veröffentlichungsnummer: WO 2013/143800

(56) Entgegenhaltungen:
- EP-A1- 1 164 279
- WO-A2-01/90611
- DE-A1- 19 607 538
- DE-A1-102008 062 100
- US-A- 5 584 467
- US-A- 5 855 195

## Beschreibung

Die Erfindung betrifft ein Gasregelventil für die Regelung einer einem Gasbrenner zuzuführenden Gasmenge mit einem Direktdruckregler, der einen durch einen elektronisch geregelten Schrittmotor bewegbaren Ventilkörper aufweist.

Aus dem Stand der Technik sind verschiedene Gasregelventile bekannt, bei denen der Ventilkörper über eine Magnetspule, beispielsweise eine Tauchspule, gegen eine Federkraft versetzt und somit die Öffnungs- und Schließstellung des Ventils geregelt wird. Auch ist beispielsweise aus der EP 2 048 439 A1 bekannt, einen Schrittmotor bei der Ventilkörperbewegung zu verwenden, wobei dieser direkt auf ein Gehäuseteil eines Radialgebläses wirkt. Weiterer Stand der Technik des vorliegenden technischen Gebiets wird durch die Dokumente WO01/90611 A2, DE 196 07 538 A1, EP 1 164 279 A1, DE 10 2008 062 100 A1 und US 5,584,467 A offenbart.

An Lösungen mit Tauchspule als Antrieb ist jedoch nachteilig, dass die Regelung durch die zwangsläufig auftretende mechanische und magnetische Hysterese ungenau und mit schlechter Vorwärtsgenauigkeit bei der Bewegung des Ventilkörpers ist, was wiederum zu ungenauen Gasmengen führt. Ferner ist das Modulationsband eines Gasbrenners bei einer Bewegung des Ventilkörpers im Gasregelventil mit Magnetspulen stark eingeschränkt und eine nur schlechte Reproduzierbarkeit der geregelten Gasmenge gewährleistet. Weiterhin ist die Durchflussmenge von dem im Gasnetz bestehenden Druck abhängig, der starken Schwankungen unterworfen ist.

Das Dokument DE 10 2008 062100 offenbart einen Gasregelventil gemäß dem Oberbegriff des Anspruchs 1.

Ausgehend von dieser Problematik ist es die Aufgabe der Erfindung, ein Gasregelventil bereitzustellen, das den Betrieb von Gasbrennern mit einem gegenüber dem Stand der Technik vergrößertem Modulationsband und eine Regelung der dem Gasbrenner zuzuführenden Gasmenge mit hoher Reproduzierbarkeit ermöglicht.

Diese Aufgaben werden gelöst durch ein Gasregelventil nach Anspruch 1.

Ein erfindungsgemäßes Gasregelventil für Gasbrenner umfasst einen Direktdruckregler, der ein Gehäuse mit Gaseinlass, einen in dem Gehäuse gehaltenen, in einer ersten und zweiten axialen Richtung beweglich angeordneten Ventilkörper, der in einer Schließstellung des Gasregelventils an einem Ventilsitz anliegt, mindestens eine erste Feder, die in der ersten axialen Richtung permanent auf den Ventilkörper wirkt, sowie eine in axialer Richtung bewegliche, mit dem Ventilkörper unmittelbar oder mittelbar über eine zweite Feder in Eingriff stehende Achse, aufweist, und mit einem auf die Achse wirkenden, elektronisch angesteuerten und elektrisch betriebenen Schrittmotor, der die Achse und somit den Ventilkörper in vordefinierten Längenabschnitten in axialer Richtung zum Öffnen und Schließen des Gasregelventils bewegt. Unter dem Merkmal einer mit dem Ventilkörper mittelbar oder unmittelbar in Eingriff stehenden Achse ist jede Ausbildung zu verstehen, die in einem Gasregelventil auf den Ventilkörper in axialer Richtung positionsverschiebend einwirkt, unabhängig davon, ob diese als zusätzliches Bauteil oder an einem Antrieb selbst vorgesehen ist. Die Achse ist vorzugsweise metallisch.

Die Kombination des Direktdruckreglers mit einem elektronisch angesteuerten Schrittmotor in einem Gasregelventil ermöglicht eine hohe Vorwärtsgenauigkeit der Bewegung des Ventilkörpers und somit der Regelung, da der Ventilkörper in sehr kleinen, vorab exakt definierbaren Schritten von dem Ventilsitz gelöst und in eine exakt festlegbare Öffnungsstellung gebracht werden kann. Auch während der Regelung kann über Halbschritte und Vollschritte des Schrittmotors eine äußerst genaue Regelung der Bewegung des Ventilkörpers in beide axiale Richtungen erfolgen. Ferner ist die Reproduzierbarkeit der durch das Gasregelventil eingeregelten Gasmenge gegenüber bisher verwendeter Antriebsmitteln wie Tauchspulen verbessert, da es nicht zu mechanischen und magnetischen Hysterese-Effekten kommt, welche stets Ungenauigkeiten bei der Bewegung des Ventilkörpers bedingen und mithin die Reproduzierbarkeit negativ beeinflussen.

Erfindungsgemäß ist der Direktdruckregler so ausgebildet, dass der Ventilkörper im Zentrum einer Membran gehalten ist und der Gaseinlass in axialer Richtung zwischen Membran und Ventilsitz erfolgt, sodass ein Gasdruck in der ersten axialen Richtung gegen die Membran und in der zweiten, entgegengesetzten axialen Richtung gegen den Ventilkörper bzw. gegen sich in radial nach außen erstreckende Abschnitte des Ventilkörpers wirkt. Der Ventilkörper befindet sich somit in einem Kräftegleichgewicht, beeinflusst durch die Federkraft der ersten Feder, den Außendruck sowie den Gasdruck gegen die den Ventilkörper haltende Membran in eine erste axiale Richtung und den Gasdruck und die Kraft des Schrittmotors auf den Ventilkörper in eine zweite axiale Richtung.

Hierdurch wird gewährleistet, dass nur ein kleiner Hub des Schrittmotors nötig ist, um den Ventilkörper in vordefinierter Weise von dem Ventilsitz in die zweite axiale Richtung zu lösen und somit eine vordefinierte Gasmenge pro Zeit durch den Ventilspalt freizugeben. Durch die erfindungsgemäße Ausbildung des Direktdruckreglers mit Kräftegleichgewicht ist ermöglicht, größere Durchtrittsdurchmesser von 15 - 35mm, vorzugsweise 15 - 25 mm für den Gasweg bereitzustellen, sodass der insgesamt notwendige Hub des Ventilkörpers vom Ventilsitz drastisch reduziert ist und 3 -8mm, vorzugsweise 3 - 5mm nicht übersteigt. Bei Gasregelventilen gemäß dem Stand der Technik wird ein Hub von 10mm und mehr benötigt. Durch die Verringerung des notwendigen Hubs in die axiale Richtung kann der die diese Axialbewegung erzeugende Schrittmotor in einer sehr einfachen und vergleichsweise kostengünstigen Ausbildung vorliegen, was zu einer erheblichen Reduzierung der Gesamtkosten des Gasregelventils in führt. Auch der Durchmesser des Gehäuses und die Größe des Ventilspalts des Gasregelventils sind durch die Bereitstellung des Kräftegleichgewichts gegenüber aus dem Stand der Technik bekannten Reglern viel größer dimensionierbar, ohne die Regelgenauigkeit negativ zu beeinträchtigen. Als Außendurchmesser "c" des Gehäuses ist erfindungsgemäß eine Größe von 30-50mm, als Öffnungsweite "b" des Ventilspalts, der die durch das Gasregelventil strömende Gasmenge bestimmt, 2 - 5mm, insbesondere 3 - 5 mm bevorzugt. Durch die Abmessungen des Direktdruckreglers ist ein gegenüber bisher verwendeten Gasregelventilen um mindestens 20% größeres Modulationsband ermöglicht.

Die Bewegung des Ventilkörpers in die zweite axiale Richtung kann ferner dadurch noch genauer geregelt werden, dass zwischen der Achse und dem Ventilkörper eine zweite Feder angeordnet ist, die in die zweite axiale Richtung auf den Ventilkörper wirkt. Bei Verwendung eines Schrittmotors können dann über einzelne Schritte und Halbschritte die vorbestimmten Öffnungsstellungen des Ventilkörpers elektronisch angesteuert werden. Zur Begünstigung der kompakten Bauweise ist in einer bevorzugten Ausführung vorgesehen, dass die zweite Feder innerhalb des hohl ausgebildeten Ventilkörpers angeordnet ist und sich in axialer Richtung entlang der Achse des Schrittmotors erstreckt. In einer vorteilhaften erfindungsgemäßen Ausführung ist der Ventilsitz durch Teile des Gehäuses des Gasregelventils gebildet, sodass auf zusätzliche Bauteile innerhalb des Gasregelventil soweit als möglich verzichtet und somit die Bauweise vor allem in axialer Richtung kleinstmöglich gestaltet werden kann.

In einer vorteilhaften Ausführung ist vorgesehen, dass der den Ventilsitz bildende Teil des Gehäuses ein sich in Umfangsrichtung radial zu einer Mittelachse des Gasregelventils erstreckender Vorsprung ist. Als Anlagefläche für den Ventilkörper dient der radial nach innen weisenden Randbereich des Vorsprungs.

Der Direktdruckregler kann in einem Ausführungsbeispiel von dem Schrittmotor durch eine Dichtplatte getrennt sein, wobei die Dichtplatte zwischen dem Schrittmotor und dem Membran angeordnet wird. Im zentralen Bereich der Dichtplatte ist eine Aussparung vorgesehen, durch die sich die Achse hindurch erstreckt und eine mittelbare Verbindung zwischen dem Schrittmotor und dem Ventilkörper herstellt. Die Dichtplatte dichtet den Direktdruckregler nicht absolut, sondern nur insoweit, wie es die Normen (zum Beispiel: DIN-EN 13611) fordern, wobei eine gewisse Gasmenge (weniger 70 Liter/Stunde) über die Aussparung der Dichtplatte entweichen darf. Eine Ausführungsform des Gasregelventils mit Dichtplatte ist dahingehend günstig, dass der verwendete Schrittmotor selbst nicht gasdicht ausgebildet sein muss und somit um mindestens 20% kostengünstiger ist.

Vorzugsweise jedoch nicht hierauf begrenzt kann bei einer Ausführung des Gasregelventils mit Dichtplatte vorgesehen sein, zwischen dem Direktdruckregler und dem Schrittmotor ein Aufsatz anzuordnen, an dem der Schrittmotor befestigt ist. Über die Achse ist eine Verbindung zwischen dem Schrittmotor und der zweiten Feder herstellbar, die auf den Ventilkörper wirkt. Der Aufsatz ist ebenfalls nicht-gasdicht und somit kostengünstig gebildet. Eine Lösung mit Dichtplatte und Aufsatz ist im Vergleich zu einem unmittelbar auf den Direktdruckregler aufgesetzten, gasdichten Schrittmotoren um mindestens 20% kostengünstiger. Die Dichtplatte ist vorzugsweise metallisch.

In einer vorteilhaften Ausführung ist das Gasregelventil als auswechselbares Modul ausgebildet, wobei unter "auswechselbares Modul" zu verstehen ist, dass das Gasregelventil eine eigenständige Komponente ist, die mit weiteren Komponenten kombiniert werden kann. Durch die Ausbildung als Modul kann das Gasregelventil über eine passende Schnittstelle an beliebigen, dafür vorgesehenen Bauteilen angebracht und wieder entfernt werden.

In einer bevorzugten Ausführung ist zumindest ein Teil des Gehäuses als eine Einsatzkartusche ausgebildet, wodurch das als Modul gebildete Gasregelventil kompakt aufgebaut und in Gehäusen von Gebläsevorrichtungen oder Gas-Luft-Mischvorrichtungen eingesteckt oder eingeschraubt werden kann. Hierbei ist günstig, wenn an dem als Einsatzkartusche ausgebildeten Gehäuse außenseitig ein Gewinde, ein Flansch oder ein vergleichbares lösbares Befestigungsmittel vorgesehen ist. Auch ist vorteilhaft, dass in eine derartige Einsatzkartusche die den Gasfluss beziehungsweise die Gasmenge bestimmenden Bauteile aufgenommen sind, und sich somit, wenn die Kartusche in dem entsprechenden Gehäuse eingeschraubt ist, im Gasströmungsweg befinden. Die "Einsatzkartusche" ist hierbei definiert als ein Gehäuseteil, der geeignet ist, in ein anderes Bauteil eingesetzt zu werden, ohne dass an dem anderen Bauteil neben einer entsprechenden Formanpassung weitergehende konstruktionsbedingte Maßnahmen bereitgestellt sein müssen.

Durch die Verwendung eines modular aufgebauten Gasregelventils ist die Entwicklungszeit reduziert, da das Modul nur einmal entwickelt werden muss, später aber in verschiedenen Endprodukten, beispielsweise in Lüftergehäusen, Gasventilgehäusen oder Gas-Luft-Krümmern, verwendet werden kann. Ferner kann das Modul separat gefertigt und in seiner Funktion getestet werden, wobei die Testvorrichtungen für das modulare Gasregelventil wesentlich kleiner sein können, als diejenigen, die im Stand der Technik für die Gesamtbauteile, z.B. Lüftergehäuse mit daran angeordnetem Gasregelventil und Sicherheitsventilen, verwendet werden mussten.

Günstig ist ferner, an einer Außenfläche der Einsatzkartusche mindestens einen Absatz vorzusehen, an dem mindestens ein Dichtmittel, beispielsweise in Form eines Dichtrings angeordnet ist. In einer bevorzugten Lösung sind zwei Absätze vorgesehen, wobei sich der erste Absatz in dem Bereich befindet, an dem der Schrittmotor auf den Direktdruckregler aufgesetzt ist und das Gasregelventil im Betrieb an einem anderen Bauteil (z.B. Lüftergehäuse, Gasventilgehäuse) anliegt, so dass das Dichtmittel das Gasregelventil gegenüber dem Bauteil abdichtet. Der zweite Absatz befindet sich vorzugsweise außenseitig in dem Bereich der Einsatzkartusche, der sich im eingebauten Zustand im Inneren des Bauteils erstreckt, wobei der Absatz an den Gasweg bestimmenden Teilen des Bauteils anliegt. Die außenseitig an der Einsatzkartusche am zweiten Absatz angeordneten Dichtmittel dichten folglich den Gasweg im Inneren des Bauteils. Hierdurch ist sichergestellt, dass der Gasweg im Inneren des Bauteils durch das Gasregelventil und nicht außen an der Einsatzkartusche vorbei verläuft.

Andere vorteilhafte Ausbildungen der Erfindung sind in den Unteransprüchen gekennzeichnet, beziehungsweise werden nachstehend zusammen mit der Beschreibung der bevorzugten Ausführung der Erfindung anhand der Figuren näher dargestellt. Es zeigen:
- Fig.1: eine seitliche Schnittansicht eines Gasregelventils mit gasdichtem Antrieb; und
- Fig.2: eine seitliche Schnittansicht eines Gasregelventils mit nichtgasdichtem Antrieb.
- Fig. 3: eine perspektivische Darstellung eines Lüfters mit einsetzbarem modular ausgebildetem Gasregelventil.

Die Figuren zeigen die zum Verständnis der Erfindung notwendigen Bauteile beispielhaft schematisch, wobei gleiche Bauteile mit jeweils gleichen Bezugszeichen gekennzeichnet sind.

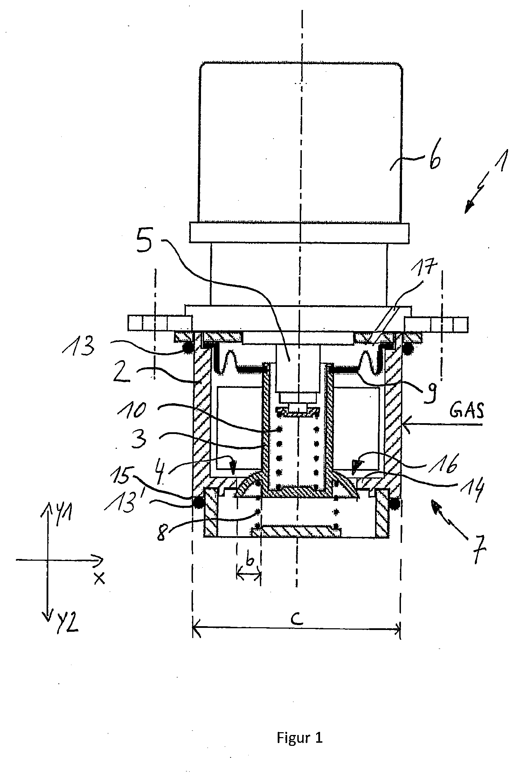

In Figur 1 ist ein Gasregelventil 1 mit einem auf einem Direktdruckregler angeordneten Schrittmotor 6 gezeigt. Das Gasregelventil 1 ist in seiner Gesamtheit als auswechselbares Modul ausgebildet, wobei das Gehäuse 2 der Teil des Moduls ist, der in das jeweilige Endprodukt (z.B. Gasventilgehäuse, Lüftergehäuse, Krümmer) eingesteckt und darin fixiert wird. Das Gehäuse 2 ist hierfür als Kartusche 7 gebildet, die im Betrieb im Bereich des Gaswegs angeordnet ist und die die Gasmenge pro Zeit regelnden Bauteile aufnimmt. Ein hohl ausgebildeter Ventilkörper 3 ist in dem kartuschenartigen Gehäuse 2 von einer Membran 9 gehalten, wobei die Membran 9 an dem Gehäuse 2 befestigt ist und eine flächige Abgrenzung zu dem Schrittmotor 6 bildet. Eine Ausgleichsöffnung 17 ermöglicht den Druckausgleich im Bereich oberhalb der Membran 9.

Das Gehäuse 2 weist einen sich in Umfangsrichtung radial zur Mittelachse des Gasregelventils hin erstreckenden Vorsprung 14 auf, der den Ventilsitz 4 für den Ventilkörper 3 bildet. Zwischen Gehäuse 2 und Ventilkörper 3 ist eine erste Feder 8 angeordnet, die in der ersten axialen Richtung Y1 auf den Ventilkörper 3 wirkt, und diesen gegen den Ventilsitz 4 drückt. Der Gaseinlass in das Gasregelventil 1 erfolgt in axialer Richtung zwischen der Membran 9 und dem Ventilsitz 4, sodass der Gasdruck in der ersten axialen Richtung Y1 gegen die Membran 9 und in der zweiten, entgegengesetzten axialen Richtung Y2 gegen den Ventilkörper 3 beziehungsweise gegen an dem Ventilkörper 3 sich in radialer Richtung nach außen hin erstreckende Abschnitte wirkt. Die Krafteinwirkung durch den Gasdruck auf den Ventilkörper 3 erfolgt somit in beide axialen Richtungen Y1, Y2 und ist in der Summe im Wesentlichen gleich Null. Der Schrittmotor 6 weist eine Achse 5 auf, über die eine Kraft in die zweite axiale Richtung Y2 mittelbar auf den Ventilkörper 3 aufgebracht werden kann, um diesen zu versetzen. In der gezeigten Ausführung ist innerhalb des Ventilkörpers 3 eine zweite, sich in axialer Richtung erstreckender Feder 10 geordnet, auf welche die Achse 5 des Schrittmotors 6 in die zweite axiale Richtung Y2 wirkt, um den Ventilkörper 3 vom Ventilsitz 4 zu lösen. Die Krafteinwirkung durch den Schrittmotor 6 über die zweite Feder 10 erfolgt gegen die Kraft der ersten Feder 8 und den außerhalb des Gasregelventils 1 herrschenden Außendruck. Der Ventilkörper 3 befindet sich über die Kräfte des Gasdrucks, und der Federkräfte in einem Kräftegleichgewicht, sodass jeder Axialversatz der Achse 5 in der zweiten axialen Richtung Y2 unmittelbar einen entsprechenden Hub des Ventilkörpers 3 vom Ventilsitz 4 bedeutet. Durch dieses Kräftegleichgewicht ist es möglich, den Durchmesser des Gehäuses 2, des Ventilkörpers 3 und des durch den Ventilkörper 3 freigegebenen Ventilspalt 16 mit einer Größe von mindestens 5mm Größe auszubilden, sodass der absolut notwendige Hub in axialer Richtung des Ventilkörpers 3 vom Ventilsitz auf 3mm begrenzt werden kann. Das Gehäuse 2 weist einen Außendurchmesser von 40-60mm, der Ventilkörper einen Außendurchmesser von 15-20mm und der für den Gasweg am Ventilsitz 4 freigegebene umlaufende Ventilspalt 16 (Abstand zwischen Abschnitt 14 und Ventilkörper 3) eine Größe von 5mm auf.

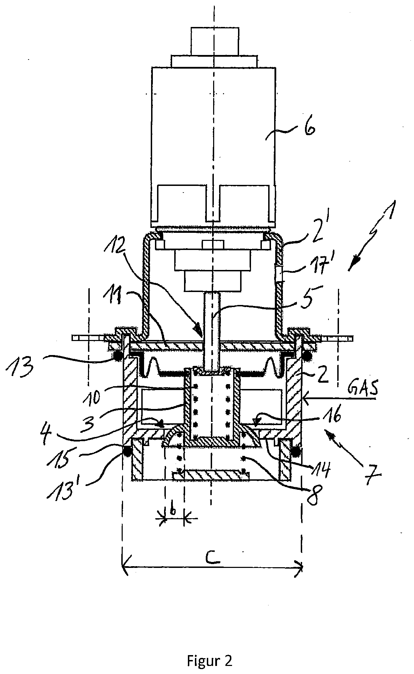

In Figur 2 ist das Gasregelventil 1 mit einem zu dem aus Figur 1 identischem Direktdruckregler umfassend das Gehäuse 2 als Kartusche 7, den Ventilkörper 3, den Ventilsitz 4, die Federn 8 und 10 sowie die am Ventilsitz 4 angeordnete Membran 9 gezeigt. Im Unterschied zu der Ausführung gemäß Figur 1 ist ein nicht-gasdichter Schrittmotor 6 verwendet, der über einen Aufsatz 2' auf dem Gehäuse 2 des Gasregelventils 1 befestigt ist, wobei der Schrittmotor 6 über die metallische Achse 5 mittelbar auf den Ventilkörper 3 wirkt und die Achse 5 als Verlängerungsstab zwischen dem Ventilkörper 3 und dem Schrittmotor 6 dient. Zwischen dem Schrittmotor 6 und dem Membran 3 ist eine metallische Dichtplatte 11 angeordnet, die im zentralen Mittelbereich eine Aussparung 12 aufweist, durch die sich die Achse 5 hindurch erstreckt. Zwar kann über die Aussparung 12 im Fehlerfall eine gewisse Gasmenge entweichen, diese ist jedoch so gering, dass die international gültigen Normen eingehalten werden. Die metallische Dichtplatte 11 ist in das Gehäuse 2 eingesetzt und über den den Schrittmotor 6 haltenden Aufsatz 2' an dem Gehäuse 2 befestigt. Zum Druckausgleich ist in dem Aufsatz 2' eine Ausgleichsöffnung 17' vorgesehen. Durch die vorliegende Konstruktion kann ein nicht-gasdichter Schrittmotor 6 verwendet werden, der gegenüber einem gasdichten Schrittmotor um mindestens 30% kostengünstiger ist. An dem als Einsatzkartusche 7 ausgebildeten Gehäuse 2 sind Dichtmittel 13, 13' vorgesehen, die einen Gasaustritt außen an dem Gasregelventil 1 vorbei verhindern. Der Aufsatz 2' weist außenseitige Bohrungen auf, durch die nicht dargestellte Schrauben zur Festlegung des Gasregelventils 1 an einem weiteren Bauteil fixierbar sind.

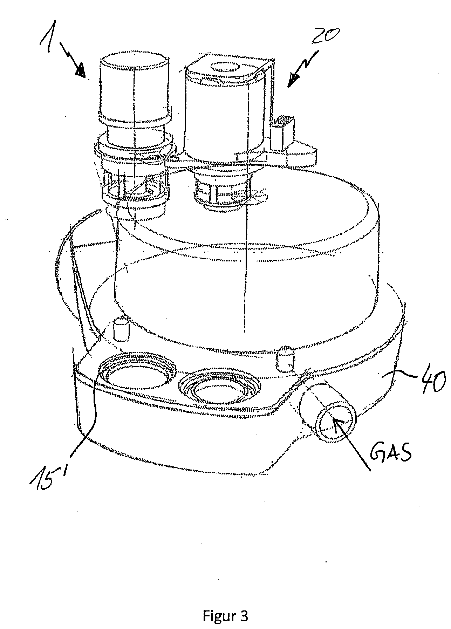

Figur 3 zeigt in perspektivisch schematischer Ansicht das Gasregelventil 1 lösbar befestigt in einem anderen Bauteil, das in Form eines Lüftergehäuses 40 dargestellt ist. An dem Lüftergehäuse 40 sind hierfür Einsätze 15' vorgesehen, in die das Gasregelventil 1 und ein Gassicherheitsventil 20 einsetzbar und über Schrauben befestigbar sind. Das Gas-Luft-Gemisch wird direkt im Lüftergehäuse 40 erzeugt und anschließend dem Brenner zugeführt.

## Patentansprüche

1. Gasregelventil zur Regelung einer einem Gasbrenner zuzuführenden Gasmenge mit
- einem Direktdruckregler, der
i. ein Gehäuse (2) mit Gaseinlass,
ii. einen in dem Gehäuse (2) gehaltenen, in einer ersten (Y1) und zweiten axialen Richtung (Y2) beweglich angeordneten Ventilkörper (3), der in einer Schließstellung des Gasregelventils (1) an einem Ventilsitz (4) anliegt,
iii. mindestens eine erste Feder (8), die in der ersten axialen Richtung (Y1) permanent auf den Ventilkörper (3) wirkt, sowie
iv. eine in axialer Richtung (Y1, Y2) bewegliche, mit dem Ventilkörper (3) unmittelbar oder mittelbar über eine zweite Feder (10) in Eingriff stehende Achse (5), aufweist, und
- einem auf die Achse (5) wirkenden, elektronisch angesteuerten Schrittmotor (6), der die Achse (5) und somit den Ventilkörper (3) in vordefinierten Längenabschnitten in axialer Richtung (Y1, Y2) zum Öffnen und Schließen des Gasregelventils (1) bewegt, dadurch gekennzeignet dass
- der Schrittmotor (6) ein nicht-gasdichter Schrittmotor ist;
- der Ventilkörper (3) von einer Membran (9) gehalten ist und der Gaseinlass in axialer Richtung zwischen Membran (9) und Ventilsitz (4) erfolgt, so dass ein Gasdruck in der ersten axialen Richtung (Y1) gegen die Membran (9) und in der zweiten, entgegengesetzten axialen Richtung (Y2) gegen den Ventilkörper (3) wirkt.

2. Gasregelventil nach zumindest einem der vorigen Ansprüche, **dadurch gekennzeichnet, dass** die zweite Feder (10) zwischen der Achse (5) und dem Ventilkörper (3) angeordnet ist und in die zweite axiale Richtung (Y2) auf den Ventilkörper (3) wirkt.

3. Gasregelventil nach zumindest einem der vorigen Ansprüche, **dadurch gekennzeichnet, dass** die zweite Feder (10) innerhalb des hohl ausgebildeten Ventilkörpers (3) angeordnet ist.

4. Gasregelventil nach zumindest einem der vorigen Ansprüche, **dadurch gekennzeichnet, dass** der Ventilsitz (4) durch einen Teil des Gehäuses (2) gebildet ist.

5. Gasregelventil nach dem vorigen Anspruch, **dadurch gekennzeichnet, dass** der den Ventilsitz (4) bildende Teil des Gehäuses (2) durch einen sich in Umfangsrichtung radial zu einer Mittelachse des Gasregelventils (1) erstreckender Vorsprung (14) ist.

6. Gasregelventil nach zumindest einem der vorigen Ansprüche, **dadurch gekennzeichnet, dass** in einer Öffnungsstellung des Gasregelventils (1) ein am Ventilsitz (3) gebildeter Ventilspalt (16) eine Größe von mindestens 5 mm aufweist.

7. Gasregelventil nach dem vorigen Anspruch, **dadurch gekennzeichnet, dass** der Ventilspalt (16) vollständig geöffnet ist, wenn der Ventilkörper (3) aus der Schließstellung um maximal 3 mm in die zweite axiale Richtung (Y2) bewegt wird.

8. Gasregelventil nach zumindest einem der vorigen Ansprüche, **dadurch gekennzeichnet, dass** zwischen dem Schrittmotor (6) und der Membran (3) eine Dichtplatte (11) mit Aussparung (12) vorgesehen ist, wobei sich die Achse (5) durch die Aussparung (12) hindurch erstreckt.

9. Gasregelventil nach zumindest einem der vorigen Ansprüche, **dadurch gekennzeichnet, dass** zwischen dem Direktdruckregler und dem Schrittmotor (6) ein Aufsatz (19) angeordnet ist, an dem der Schrittmotor (6) befestigt ist.

10. Gasregelventil nach zumindest einem der vorigen Ansprüche, **dadurch gekennzeichnet, dass** es in seiner Gesamtheit als auswechselbares Modul ausgebildet ist.

11. Gasregelventil nach zumindest einem der vorigen Ansprüche, **dadurch gekennzeichnet, dass** zumindest ein Teil des Gehäuses (2) als eine Einsatzkartusche (7) ausgebildet ist.

12. Gasregelventil nach dem vorigen Anspruch, **dadurch gekennzeichnet, dass** an einer Außenfläche der Einsatzkartusche (7) mindestens ein Absatz (15) vorgesehen ist, an dem mindestens ein Dichtmittel (13, 13') angeordnet ist.

13. Gasregelventil nach zumindest einem der vorigen Ansprüche, **dadurch gekennzeichnet, dass** an der Einsatzkartusche (7) oder dem Aufsatz (19) Mittel zur Befestigung des Gasregelventils (1) an einem anderen Bauteil vorgesehen sind.

## Claims

1. A gas control valve for controlling a quantity of gas to be supplied to a gas burner having
- a direct pressure regulator having
i. a housing (2) with gas inlet,
ii. a valve body (3) supported in the housing (2), movably arranged in a first (Y1) and a second axial direction (Y2) bearing against a valve seat (4) in a closed position of the gas control valve (1),
iii. at least one first spring (8) permanently acting on the valve body (3) in the first axial direction (Y1), and
iv. an axis (5) movable in the axial direction (Y1, Y2), in direct or indirect engagement with the valve body (3) by means of a second spring (10), and
- an electronically controlled stepper motor (6) acting on the axis (5), which moves the axis (5) and thus the valve body (3) in predefined length sections in the axial direction (Y1, Y2) for opening and closing the gas control valve (1), **characterized in that**
- the stepper motor (6) is a non-gas-tight stepper motor;
- the valve body (3) is held by a diaphragm (9) and the gas inlet occurs in the axial direction between the diaphragm (9) and the valve seat (4) so that a gas pressure acts in the first axial direction (Y1) against the diaphragm (9) and in the second, opposite axial direction (Y2) against the valve body (3).

2. Gas control valve according to at least one of the preceding claims, **characterized in that** the second spring (10) is arranged between the axis (5) and the valve body (3) and acts on the valve body (3) in the second axial direction (Y2).

3. Gas control valve according to at least one of the preceding claims, **characterized in that** the second spring (10) is arranged inside the hollow valve body (3).

4. Gas control valve according to at least one of the preceding claims, **characterized in that** the valve seat (4) is formed by a part of the housing (2).

5. Gas control valve according to the previous claim, **characterized in that** the part of the housing (2) forming the valve seat (4) is a protrusion (14) extending circumferentially radially to a central axis of the gas control valve (1).

6. Gas control valve according to at least one of the preceding claims, **characterized in that**, in an open position of the gas control valve (1), a valve gap (16) formed on the valve seat (3) has a size of at least 5 mm.

7. Gas control valve according to the previous claim, **characterized in that** the valve gap (16) is completely open when the valve body (3) is moved from the closed position by a maximum of 3 mm in the second axial direction (Y2).

8. Gas control valve according to at least one of the preceding claims, **characterized in that** a sealing plate (11) with a recess (12) is provided between the stepper motor (6) and the diaphragm (3), the axis (5) extending through the recess (12).

9. Gas control valve according to at least one of the preceding claims, **characterized in that** an attachment (19), to which the stepper motor (6) is attached, is arranged between the direct pressure regulator and the stepper motor (6).

10. Gas control valve according to at least one of the preceding claims, **characterized in that** it is formed in its entirety as an exchangeable module.

11. Gas control valve according to at least one of the preceding claims, **characterized in that** at least part of the housing (2) is designed as an insert cartridge (7).

12. Gas control valve according to the previous claim, **characterized in that** at least one shoulder (15), on which at least one sealing means (13, 13') is arranged, is provided on an outer surface of the insert cartridge (7).

13. Gas control valve according to at least one of the preceding claims, **characterized in that** means for attaching the gas control valve (1) to another component are provided on the insert cartridge (7) or the attachment (19).

## Revendications

1. Vanne de régulation de gaz pour la régulation d'une quantité de gaz à amener à un brûleur à gaz avec
- un régulateur de pression direct, qui présente
i. un boîtier (2) avec entrée de gaz,
ii. un corps de vanne (3) retenu dans le boîtier (2), agencé mobile dans une première (Y1) et deuxième direction axiale (Y2), qui s'appuie dans une position de fermeture de la vanne de régulation de gaz (1) sur un siège de vanne (4),
iii. au moins un premier ressort (8), qui agit dans la première direction axiale (Y1) de façon permanente sur le corps de vanne (3), ainsi que
iv. un axe (5) mobile dans la direction axiale (Y1, Y2), en prise avec le corps de vanne (3) directement ou indirectement par le biais d'un deuxième ressort (10), et
- un moteur pas à pas (6) à commande électronique, agissant sur l'axe (5), qui déplace l'axe (5) et ainsi le corps de vanne (3) dans des tronçons de longueur prédéfinis dans la direction axiale (Y1, Y2) pour ouvrir et fermer la vanne de régulation de gaz (1), **caractérisée en ce que**
- le moteur pas à pas (6) est un moteur pas à pas non étanche au gaz ;
- le corps de vanne (3) est retenu par une membrane (9) et l'entrée de gaz a lieu dans la direction axiale entre la membrane (9) et le siège de vanne (4), de sorte qu'une pression de gaz agit dans la première direction axiale (Y1) contre la membrane (9) et dans la deuxième direction axiale (Y2) opposée contre le corps de vanne (3).

2. Vanne de régulation de gaz selon au moins l'une quelconque des revendications précédentes, **caractérisée en ce que** le deuxième ressort (10) est agencé entre l'axe (5) et le corps de vanne (3) et agit dans la deuxième direction axiale (Y2) sur le corps de vanne (3).

3. Vanne de régulation de gaz selon au moins l'une quelconque des revendications précédentes, **caractérisée en ce que** le deuxième ressort (10) est agencé à l'intérieur du corps de vanne (3) creux.

4. Vanne de régulation de gaz selon au moins l'une quelconque des revendications précédentes, **caractérisée en ce que** le siège de vanne (4) est formé par une partie du boîtier (2).

5. Vanne de régulation de gaz selon la revendication précédente, **caractérisée en ce que** la partie du boîtier (2) formant le siège de vanne (4) est par une saillie (14) s'étendant dans la direction périphérique radialement par rapport à un axe médian de la vanne de régulation de gaz (1).

6. Vanne de régulation de gaz selon au moins l'une quelconque des revendications précédentes, **caractérisée en ce qu'**une fente de vanne (16) formée au niveau du siège de vanne (3) présente une taille d'au moins 5 mm dans une position d'ouverture de la vanne de régulation de gaz (1).

7. Vanne de régulation de gaz selon la revendication précédente, **caractérisée en ce que** la fente de vanne (16) est ouverte entièrement lorsque le corps de vanne (3) est déplacé de la position de fermeture de maximum 3 mm dans la deuxième direction axiale (Y2).

8. Vanne de régulation de gaz selon au moins l'une quelconque des revendications précédentes, **caractérisée** eh ce qu'une plaque d'étanchéité (11) avec évidement (12) est prévue entre le moteur pas à pas (6) et la membrane (3), dans laquelle l'axe (5) s'étend à travers l'évidement (12).

9. Vanne de régulation de gaz selon au moins l'une quelconque des revendications précédentes, **caractérisée en ce qu'**une coiffe (19), au niveau de laquelle le moteur pas à pas (6) est fixé, est agencée entre le régulateur de pression direct et le moteur pas à pas (6).

10. Vanne de régulation de gaz selon au moins l'une quelconque des revendications précédentes, **caractérisée en ce qu'**elle est réalisée dans son intégralité en tant que module remplaçable.

11. Vanne de régulation de gaz selon au moins l'une quelconque des revendications précédentes, **caractérisée en ce qu'**au moins une partie du boîtier(2) est réalisée en tant que cartouche d'insertion (7).

12. Vanne de régulation de gaz selon la revendication précédente, **caractérisée en ce qu'**au moins un gradin (15), au niveau duquel au moins un moyen d'étanchéité (13, 13') est agencé, est prévu au niveau d'une surface extérieure de la cartouche d'insertion (7).

13. Vanne de régulation de gaz selon au moins l'une quelconque des revendications précédentes, **caractérisée en ce que** des moyens de fixation de la vanne de régulation de gaz (1) au niveau d'un autre composant sont prévus au niveau de la cartouche d'insertion (7) ou de la coiffe (19).
